Europäisches Patentamt

European Patent Office

Office européen des brevets

(11) Veröffentlichungsnummer: **0 263 354**
**B1**

(12) **EUROPÄISCHE PATENTSCHRIFT**

(45) Veröffentlichungstag der Patentschrift:
31.10.90

(21) Anmeldenummer: 87113867.3

(22) Anmeldetag: 23.09.87

(51) Int. Cl.⁵: **B29C 51/26**

(54) Vorrichtung zum Herstellen von mit hinterschäumten Bezügen versehenen Polstern, insbesondere Automobilsitzpolstern.

(30) Priorität: 04.10.86 DE 3633923

(43) Veröffentlichungstag der Anmeldung:
13.04.88 Patentblatt 88/15

(45) Bekanntmachung des Hinweises auf die Patenterteilung:
31.10.90 Patentblatt 90/44

(84) Benannte Vertragsstaaten:
BE DE ES FR GB IT NL SE

(56) Entgegenhaltungen:
DE-A- 2 746 686
DE-A- 3 034 973
DE-A- 3 319 391
US-A- 2 774 410

(73) Patentinhaber: BAYER AG,
D-5090 Leverkusen 1 Bayerwerk(DE)
Patentinhaber: Fritsche-Möllmann GmbH & Co. KG,
Hansaring 6, D-4531 Lotte(DE)

(72) Erfinder: Onnenberg, Volker, Dipl.-Ing., Schässburger
Gasse 2, D-5267 Wiehl(DE)
Erfinder: Möllmann, Günter, Am Höhneberg 2,
D-4506 Hagen(DE)

(74) Vertreter: Müller, Heinz-Gerd, Dipl.-Ing., BAYER AG
Konzernverwaltung RP Patentabteilung,
D-5090 Leverkusen 1, Bayerwerk(DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Vorrichtung zum Herstellen von mit hinterschäumten Bezügen versehenen Polstern, insbesondere Automobilsitzpolstern

Die Erfindung bezieht sich auf eine Vorrichtung zum Herstellen von mit hinterschäumten Bezügen versehenen Polstern, insbesondere Automobilsitzpolstern, bestehend aus einem Formwerkzeug mit zugeordnetem Mischkopf.

Man hat schon auf verschiedenste Weise versucht, den Bezugsstoffabschnitt möglichst faltenfrei, beziehungsweise an vorgesehenen Stellen reproduzierbar in unvermeidbare, jedoch geordnete Falten gelegt und überall voll an die Formhohlraumwandung anliegend, im Formhohlraum zu plazieren.

Es ist allgemein bekannt, hierfür sogenannte Vakuumformwerkzeuge zu verwenden, bei welchen durch in der Formhohlraumwandung vorgesehene Perforationen der Bezugsstoffabschnitt mittels Unterdruck an die Wandung angesaugt wird.

In der Regel benutzt man zusätzlich einen Spannrahmen, welcher den zunächst über die untere Formwerkzeughälfte gelegten Bezugsstoffabschnitt mit kontrolliertem Druck auf die den Formhohlraum umgebende Fläche der unteren Formwerkzeughälfte drückt. Schließlich ist es auch möglich, einen sogenannten Oberstempel zu benutzen, mit welchem man den Bezugsstoffabschnitt in den Formhohlraum drückt. Meist werden alle drei Maßnahmen gleichzeitig verwendet (DE-OS 27 46 686). Es versteht sich, daß auch jede Maßnahme allein, jedoch mit mäßigerem Erfolg, angewendet werden kann. Auch die Kombination aller drei Maßnahmen zum Zwecke der Optimierung hat dann ihre Grenzen, wenn das zu fertigende Polster kompliziert gestaltet ist und der Formhohlraum ebenfalls eine dementsprechend komplizierte Geometrie, wie beispielsweise Hinterschneidungen, aufweist. An derartig kritischen Stellen ist es nämlich außerordentlich schwierig, den Bezugsstoffabschnitt ohne zuviel direkte manuelle Nachhilfe zum Anliegen an die Formhohlraumwandung zu bekommen. Auch die anschließende Hinterschäumung bietet keine Gewähr, daß die Formhohlraumkontur voll ausgefüllt wird. Unvollständig geformte Polster sind oft nicht nur unansehnlich, sondern auch aus technischen Gründen nicht mehr brauchbar; sie bedeuten Ausschuß.

Es besteht die Aufgabe, bei der Herstellung von Polstern der eingangs genannten Art, welche eine komplizierte Form aufweisen, die durch den Formhohlraum entsprechend nachgebildet ist, an den besonders kritischen Stellen des Formhohlraumes, insbesondere an Hinterschneidungen, das Anlegen des Bezugsstoffabschnittes an die Formhohlraumwandung zu verbessern.

Gelöst wird diese Aufgabe durch eine über der unteren Formwerkzeughälfte an einer Halterung angeordneten Schubleiste, wobei die untere Formwerkzeughälfte und/oder die Halterung bzw. Schubleiste zueinander bewegbar sind und die Schubleiste der Kontur des Randes des Formhohlraumes angepaßt ist, aber in Schubposition einen die Stärke des Bezugstoffabschnittes berücksichtigenden, jedoch gegenüber dieser Stärke Untermaß aufweisenden Spalt zum Rand des Formhohlraumes beläßt und wobei ihre diesem Rand zugewandte Fläche als Reibfläche ausgebildet ist.

Selbstverständlich läßt sich die Schubleiste in besonders vorteilhafter Weise zusammen mit einem Vakuumformwerkzeug, einem Spannrahmen und/oder einem Oberstempel gleichzeitig verwenden. Nichtsdestoweniger kann es auch Anwendungsfälle geben, wo die Schubleiste allein ohne die genannten weiteren Hilfen ausreicht, um im Zusammenwirken mit geringer manueller Tätigkeit den Bezugsstoffabschnitt ausreichend gut an der Formhohlraumwandung zu plazieren. Bei der Relativbewegung zwischen Schubleiste und Rand des Formhohlraumes nimmt die Reibfläche den Bezugsstoff mit, so daß nunmehr insbesondere bei Hinterschneidungen die erforderliche Menge vorhanden ist, um sich überall anzulegen. Es versteht sich, daß die Reibfläche und ihre Höhe auf den speziellen Fall abzustimmen sind. Die Reibfläche muß so beschaffen sein, daß sie den Bezugsstoff genügend greift, um ihn schieben zu können. Hierzu gehört auch eine optimale Weite des Spaltes zwischen Rand und Schubleiste bzw. Reibfläche. Die gewählte Höhe der Reibfläche sorgt dafür, daß die benötigte Menge Bezugsstoff nachgeschoben wird. Eine Optimierung dieser Faktoren läßt sich von Fall zu Fall recht einfach durch Versuche ermitteln.

Gemäß einer ersten Ausführungsform besteht die Reibfläche aus einer Aufrauhung, beispielsweise in Form einer Rasterung durch Riefen.

Eine solche Aufrauhung muß auf die Beschaffenheit der zu beanspruchenden Rückseite des Bezugsstoffabschnittes abgestimmt sein, damit keine Beschädigungen auftreten.

Alternativ hierzu besteht die Reibfläche aus einem Elastomerbelag. Auch hier muß die Härte entsprechend der Beschaffenheit der Bezugsstoffrückseite gewählt werden. Es versteht sich, daß der Elastomerbelag zusätzlich Oberflächenkonturen aufweisen kann.

Vorzugsweise ist die Schubleiste federnd gelagert.

Diese Maßnahme ermöglicht es, daß der zwischen der Schubleiste und dem Rand des Formhohlraumes gebildete Spalt durch den darin geführten Bezugsstoffabschnitt völlig ausgefüllt ist, wobei sich die federnde Schubleiste entsprechend gegen den Bezugsstoff anpreßt und auf diese Weise infolge der verstärkten Reibung eine besonders gute Schubkraft ausübt.

Da bei den meisten Vorrichtungen dieser Art die Schubleiste beim Schließen des Formwerkzeuges hinderlich sein würde, ist die Schubleiste vorzugsweise aus dem senkrechten Projektionsbereich des Formwerkzeughohlraumes bzw. des Formwerkzeuges entfernbar.

Dies geschieht dadurch, daß entweder die untere Formwerkzeughälfte oder, was aus konstruktiven Gründen meist zweckmäßiger ist, die Schubleiste entsprechend verschiebbar gelagert ist.

Vorzugsweise ist die Schubleiste an einer als Tragrahmen ausgebildeten Halterung angeordnet.

Dies hat den Vorteil, daß man ihn auf Schienen verfahrbar lagern kann. Daß man ihn in Arbeitsposition zweckmäßigerweise fixiert, ist selbstverständlich.

Wird ein Oberstempel als Halterung verwendet, so läßt sich die Schubleiste vorzugsweise seitlich an diesem Oberstempel anbringen.

Auf diese Weise läßt sich die Schubleiste zusammen mit dem Oberstempel aus dem besagten Projektionsbereich entfernen, wobei gegebenenfalls der Oberstempel und damit indirekt die Schubleiste an einem Tragrahmen befestigt sind.

In der Zeichnung ist die neue Vorrichtung rein schematisch in einem Ausführungsbeispiel dargestellt und nachstehend näher erläutert. Es zeigen:

Fig. 1 die Vorrichtung im Schnitt,
Fig. 2 eine vergrößerte und detaillierte Darstellung der Anordnung der Schubleiste der Vorrichtung nach Fig. 1 und
Fig. 3 eine weitere Ausführungsform der Reibfläche der Schubleiste in der Draufsicht.

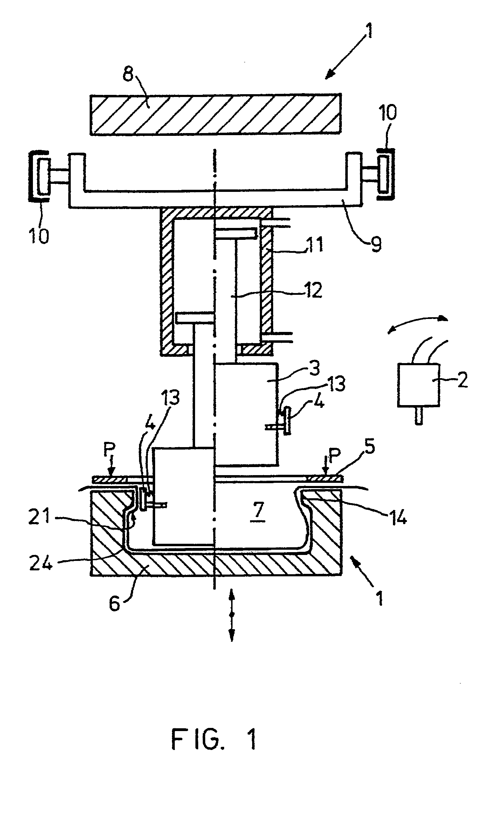

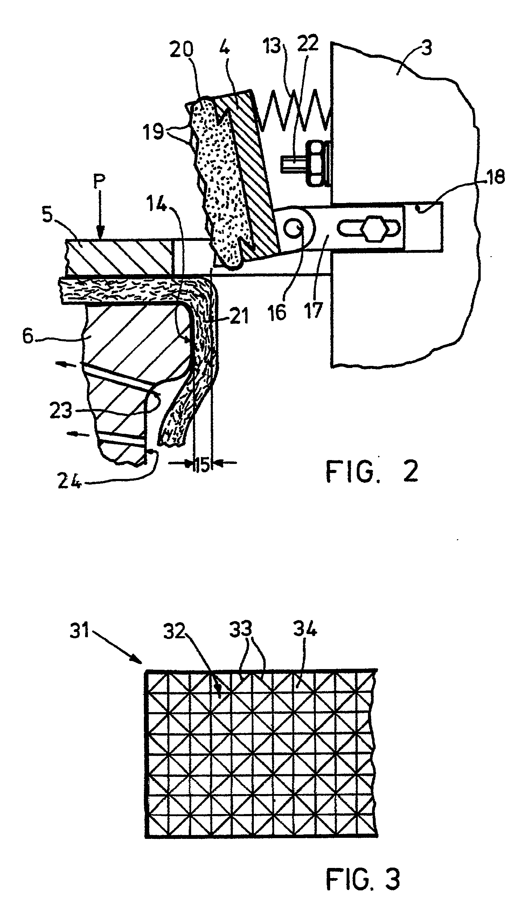

In Fig. 1, 2 besteht die Vorrichtung aus einem Vakuumformwerkzeug 1, einem Mischkopf 2, einer als verfahrbarer Oberstempel 3 ausgebildeten Halterung 3 mit Schubleiste 4 sowie einem Spannrahmen 5.

Das Vakuumformwerkzeug 1 besteht aus einer unteren Formwerkzeughälfte 6, welche den Formhohlraum 7 enthält und gegen die fix angeordnete, obere Formwerkzeughälfte 8 zum Zwecke des Schließens und Öffnens der Vakuumformwerkzeuges 1 verfahrbar ist. Der Mischkopf 2 ist rein schematisch dargestellt und läßt sich zum Einfüllen eines Polyurethan-Reaktionsgemisches über den Formhohlraum 7 schwenken. Der Oberstempel 3 ist an einem Tragrahmen 9 befestigt, welcher in Schienen 10 aus dem senkrechten Projektionsbereich des Formwerkzeuges 1 bzw. des Formhohlraumes 7 herausfahrbar ist. Der Oberstempel 3 weist einen in einem Zylinder 11 geführten Kolben 12 auf, welcher abwechselnd beidseitig hydraulisch beaufschlagbar ist. In Fig. 1 ist der Oberstempel 3 auf der rechten Seite in oberer Totpunktlage dargestellt, auf der linken Seite in herabgefahrener Stellung. An den Seiten des Oberstempels 3 sind Schubleisten 4 angeordnet. Sie sind mittels Federn 13 am Oberstempel 3 gelagert (siehe Fig. 2) und sind in bezug auf den inneren Rand 14 des Formhohlraumes 7 so eingestellt, daß ein geringer Spalt 15 verbleibt. Hierzu ist die Schubleiste 4 mittels eines Gelenkes 16 an Laschen 17 gelagert, welche in Führungen 18 des Oberstempels 3 ein-und feststellbar gelagert sind (nur eine Lasche und eine Führung sind dargestellt). Beim Herabfahren drückt die Schubleiste 4, welche mit einem höckerartige Konturierungen 19 aufweisenden Elastomerbelag aus Polyurethan als Reibfläche 20 versehen ist, gegen den durch den verbleibenden Spalt 15 geführten Bezugsstoffabschnitt 21 und schiebt inh mit. Ein einstellbarer Anschlagbolzen 22 sorgt dafür, daß die Zusammendrückbarkeit der Feder 13 begrenzt ist, damit eine maximale Breite des Spaltes 15 gewahrt bleibt. Da der nachgeschobene Teil des Bezugsstoffabschnittes 21 momentan nicht gespannt ist, reicht das Vakuum nunmehr wieder aus, um ihn auch in der Hinterschneidung 23 an die Wandung 24 des Formhohlraumes 7 anzusaugen.

In Fig. 3 ist die Schubleiste 31 mit einer Aufrauhung als Reibfläche 32 versehen, welche sich kreuzende Riefen 33 und dadurch gebildete vierseitige Pyramiden 34 aufweist.

## Patentansprüche

1. Vorrichtung zum Herstellen von mit hinterschäumten Bezügen versehenen Polstern, insbesondere Automobilsitzpolstern, bestehend aus einem Formwerkzeug (1) mit zugeordnetem Mischkopf (2), gekennzeichnet durch eine über der unteren Formwerkzeughälfte (6) an einer Halterung (3, 9) angeordneten Schubleiste (4, 31), wobei die untere Formwerkzeughälfte (6) und/oder die Halterung (3, 9) bzw. die Schubleiste (4, 31) zueinander bewegbar sind und die Schubleiste (4, 31) der Kontur des Randes (14) des Formhohlraumes (7) angepaßt ist, aber in Schubposition einen die Stärke des Bezugstoffabschnittes (21) berücksichtigenden, jedoch gegenüber dieser Stärke Untermaß aufweisenden Spalt (15) zum Rand (14) des Formhohlraumes (7) beläßt und daß ihre diesem Rand (14) zugewandte Fläche als Reibfläche (20, 32) augebildet ist.

2. Vorrichtung nach Anspruch 1, dadurch gekennzeichnet, daß die Reibfläche (32) aus einer Aufrauhung (33, 34) besteht.

3. Vorrichtung nach einem der Ansprüche 1 oder 2, dadurch gekennzeichnet, daß die Reibfläche (20) aus einem Elastomerbelag besteht.

4. Vorrichtung nach einem der Ansprüche 1 bis 3, dadurch gekennzeichnet, daß die Schubleiste (4) federnd (13) gelagert ist.

5. Vorrichtung nach einem der Ansprüche 1 bis 4, dadurch gekennzeichnet, daß die Schubleiste (4) aus dem senkrechten Projektionsbereich des Formhohlraumes (7) entfernbar angeordnet ist.

6. Vorrichtung nach einem der Ansprüche 1 bis 5, dadurch gekennzeichnet, daß die Schubleiste (4, 31) an einer als Tragrahmen (9) ausgebildeten Halterung (9) angeordnet ist.

7. Vorrichtung nach einem der Ansprüche 1 bis 5, dadurch gekennzeichnet, daß die Halterung (3) aus einem Oberstempel (3) besteht.

## Claims

1. An apparatus for the production of cushions provided with back-foamed covers, more particularly car seat cushions, consisting of a mould (1) with an associated mixing head (2), characterized by a thrust bar (4, 31) arranged on a holder (3, 9) over the lower half (6) of the mould, the lower mould half (6) and/or the holder (3, 9) and the thrust bar (4, 31) being displaceable relative to one another and the thrust bar (4, 31) being adapted to the contour of the edge (14) of the mould cavity (7), but - in the thrust position - defining a gap (15) with the edge (14) of the mould cavity (7) which takes into account the thickness of the covering (21), but is undersized in relation to that thickness, and in that that surface facing the edge (14) is in the form of a friction surface (20, 32).

2. An apparatus as claimed in claim 1, characterized in that the friction surface (32) consists of a roughening (33, 34).

3. An apparatus as claimed in claim 1 or 2, characterized in that the friction surface (20) consists of an elastomeric coating.

4. An apparatus as claimed in any of claims 1 to 3, characterized in that the thrust bar (4) is spring (13) mounted.

5. An apparatus as claimed in any of claims 1 to 4, characterized in that the thrust bar (4) is arranged to be removed from the vertical projection of the mould cavity (7).

6. An apparatus as claimed in any of claims 1 to 5, characterized in that the thrust bar (4, 31) is arranged on the holder (9) in the form of a support frame (9).

7. An apparatus as claimed in any of claims 1 to 5, characterized in that the holder (3) consists of a top force (3).

## Revendications

1. Dispositif pour la fabrication de rembourrages munis de revêtements à face dorsale en mousse, en particulier, des rembourrages pour sièges de véhicules automobiles, constitué d'un outil de formage (1) muni d'une tête de mélange correspondante (2), caractérisé par une barre de poussée (4, 31) placée sur un dispositif de fixation (3, 9), par-dessus la moitié inférieure de l'outil de formage (6), cette dernière et/ou le dispositif de fixation (3, 9) ou encore la barre de poussée (4, 31) pouvant se déplacer l'un par rapport à l'autre, la barre de poussée (4, 31) épousant la forme du contour du bord (14) de la cavité de formage (7); toutefois, en position de poussée, la barre destinée à cet effet, laisse un interstice (15) par rapport au bord (14) de la cavité de formage (7), cet interstice prenant en compte l'épaisseur du coupon de matière de revêtement (21), mais présentant une dimension inférieure à cette épaisseur, la surface de la barre de poussée tournée en direction du bord (14) de la cavité de formage étant réalisée en surface de frottement (20, 32).

2. Dispositif selon la revendication 1, caractérisé en ce que la surface de frottement (32) est munie de rugosités (33, 34).

3. Dispositif selon l'une quelconque des revendications 1 ou 2, caractérisé en ce que la surface de frottement (20) est constituée d'une couche élastomère.

4. Dispositif selon l'une quelconque des revendications 1 à 3, caractérisé en ce que la barre de poussée (4) est sollicitée par un ressort (13).

5. Dispositif selon l'une quelconque des revendications 1 à 4 caractérisé en ce que la barre de poussée (4) est disposée pour pouvoir se retirer de la zone de projection verticale de la cavité de formage (7).

6. Dispositif selon l'une quelconque des revendications 1 à 5 caractérisé en ce que la barre de poussée (4, 31) est placée contre un dispositif de fixation (9) réalisé en cadre de support (9).

7. Dispositif selon l'une quelconque des revendications 1 à 5 caractérisé en ce que le dispositif de fixation (3) est constitué d'un poinçon supérieur (3).

EP 0 263 354 B1

FIG. 1

FIG. 2

FIG. 3